# EUROPÄISCHE PATENTSCHRIFT

(11) **EP 2 154 029 B1**
(45) Veröffentlichungstag und Bekanntmachung des Hinweises auf die Patenterteilung: **01.12.2010**
(21) Anmeldenummer: 09009194.3
(22) Anmeldetag: 15.07.2009
(51) Int. Cl.: B60R 19/04, B60R 19/56

(54) **Stoßfängeranordnung für ein Kraftfahrzeug**
Bumper assembly for a motor vehicle
Agencement de pare-chocs pour un véhicule automobile

(30) Priorität: 29.07.2008 DE 102008035336
(43) Veröffentlichungstag der Anmeldung: 17.02.2010
(73) Patentinhaber: MAN Nutzfahrzeuge Österreich AG, 4400 Steyr (AT)
(72) Erfinder: Täuber, Klemens, 4400 Steyr (AT); Vogl, Markus, 4407 Steyr-Gleink (AT)

(56) Entgegenhaltungen:
- EP-A- 1 623 879
- WO-A-02/070327
- US-A1- 2004 032 133
- US-A1- 2006 125 253
- US-A1- 2006 197 347

## Beschreibung

Die vorliegende Erfindung bezieht sich auf eine Stoßfängeranordnung für ein Kraftfahrzeug und insbesondere für ein Nutzfahrzeug. Aus dem Stand der Technik sind derartige Stoßfängeranordnungen seit langem bekannt. Üblicherweise weisen derartige Stoßfängeranordnungen eine Stoßfängereinheit aus einem Kunststoff auf, wobei an dieser Stoßfängereinheit auch Träger für die Fahrzeugbeleuchtungen, dass heißt die Scheinwerfer des Fahrzeugs, angeordnet sind. Dabei sind derartige Stoßfängeranordnungen in der Regel so stabil ausgeführt, dass sie auch dem Gewicht einer Person standhalten, die beispielsweise die Frontscheibe des Fahrzeugs putzt. Eine weitergehende Funktion, insbesondere hinsichtlich eines Aufprallschutzes kommt jedoch auch diesen Stoßfängeranordnungen nicht zu.

Die gattungsbildende EP 1 623 879 A1 beschreibt eine Kraftfahrzeug-Frontblockeinheit mit einem Mittelteil und zwei sich seitlich erstreckenden flexiblen Trägem.

In der US 2006/0125253 A1 ist eine Stoßfängeranordnung für ein Kraftfahrzeug beschrieben, welche zwei Endkappenversteifungen aufweist.

Die US 2004/0032133 A1, die WO 02/070327 A1 und die US 2006/02197347 A1 beschreiben ebenfalls mehrteilige Stoßfängeranordnungen für Kraftfahrzeuge, welche zum allgemeinen Stand der Technik beitragen.

Der vorliegenden Erfindung liegt die Aufgabe zugrunde, Stoßfängeranordnungen für Kraftfahrzeuge kostengünstiger auszuführen. Eine weitere Aufgabe besteht darin, Stoßfängeranordnungen zur Verfügung zu stellen, welche bei Beschädigungen einen kostengünstigeren Austausch ermöglichen. Dies wird erfindungsgemäß durch ein Kraftfahrzeug nach Anspruch 1 und eine Stoßfängeranordnung für ein Kraftfahrzeug nach Anspruch 12 erreicht. Vorteilhafte Ausbildungsformen und Weiterbildungen sind Gegenstand der Unteransprüche.

Ein Kraftfahrzeug und insbesondere Nutzfahrzeug nach dem Anspruch 1 weist einen Fahrgestellrahmen auf, sowie einen Lenkungsblock und eine frontseitige Stoßfängeranordnung, wobei die Stoßanfängeranordnung wenigstens eine zentrale Stoßfängereinrichtung sowie wenigstens zwei Trägereinheiten für Beleuchtungsmittel des Fahrzeugs aufweist und diese beiden Trägereinheiten voneinander beabstandet sind. Weiterhin ist die Stoßfängeranordnung bzw. wenigstens ein Bestandteil derselben an dem Fahrzeug befestigt. Die Trägereinheiten sind getrennt von der zentralen Stoßfängereinrichtung ausgeführt und die Trägereinheiten sind direkt an den Fahrzeug befestigt. Durch diese Vorgehensweise ist es möglich, dass bei einer Beschädigung der zentralen Stoßfängereinrichtung, welche beispielsweise beim Rangieren auftreten kann, diese separat ausgewechselt werden kann, ohne dass gleichzeitig auch die Trägereinrichtungen mit ausgetauscht werden müssen. Auf diese Weise können die Kosten für einen Austausch reduziert werden. Erfindungsgemäß sind die Trägereinheiten an einem gemeinsam Verbindungsrohr angeordnet. Dieses gemeinsame Verbindungsrohr dient dabei bevorzugt auch zu dem Zweck, Auftrittskräfte an Frontaufstieg zu verteilen. Auf diese Weise ist es möglich, die zentrale Stoßfängereinrichtung weniger stabil und damit kostengünstig herzustellen. Diese zentrale Stoßfängereinrichtung kann mit anderen Worten als reines Designteil ausgeführt werden und muss umgekehrt nicht als selbst tragendes Strukturteil ausgebildet sein. Die Trägereinheiten sind bevorzugt endseitig an dem gemeinsamen Verbindungsrohr angeordnet.

Vorzugsweise sind die Trägereinheiten jeweils an den Lenkungsblock des Fahrzeugs angeordnet. Dies bedeutet, dass die Trägereinheiten und damit auch die an diesen angeordneten Beleuchtungseinheiten, wie Scheinwerfer oder auch LED Beleuchtungen, unmittelbar am Kraftfahrzeug selbst und insbesondere dessen Fahrgestell angeordnet sind. Genauer sind die Scheinwerfer des Fahrzeugs mittels der genannten Trägereinheiten bzw. Scheinwerferträger direkt an den Fahrgestellrahmen befestigt.

Vorzugsweise ist das Verbindungsrohr aus einem Metall gefertigt und für die Aufnahme von Transversalkräften geeignet. Vorzugsweise handelt es sich bei dem Verbindungsrohr um ein Stahlrohr.

Dabei ist es möglich, dass das Verbindungsrohr lediglich an den beiden Trägereinheiten angeordnet ist und von diesen gehalten wird. Es wäre jedoch auch möglich, das Verbindungsrohr zusätzlich an einen Lenkungsblock anzuordnen und in besonders bevorzugter Ausführungsform das Verbindungsrohr an den beiden Längsträgern des Fahrgestellrahmens zu befestigen. Auf diese Weise kann die Belastbarkeit des Verbindungsohres erhöht werden.

Bei einer weiteren bevorzugten Ausführungsform ist die zentrale Stoßfängereinrichtung an dem Verbindungsrohr oder benachbart zu diesem angeordnet. Falls der Benutzer zum Reinigen der Frontscheibe an dem Fahrzeug aufsteigen muss, kann er dabei mit den Füßen auf einen Bereich der zentralen Stoßfängereinrichtung treten, wobei direkt unterhalb diesen Bereiches das Verbindungsrohr verläuft, welches damit die Gewichtkraft des Benutzers aufnimmt.

Bei einer weiteren vorteilhaften Ausführungsform ist die zentrale Stoßfängereinrichtung mehrteilig ausgebildet. Bevorzugt weißt die zentrale Stoßfängereinrichtung ein Mittelteil und zwei seitlich an diesem Mittelteil angeordnete Seitenteile auf. Vorzugsweise sind dabei diese beiden Seitenteile symmetrisch zueinander ausgebildet. Auf diese Weise können ebenfalls die Reparaturkosten herabgesenkt werden, da lediglich die jeweils beschädigten Elemente ausgewechselt werden können. Bevorzugt steht das Mittelteil über die beiden Seitenteile mit den Trägereinheiten und damit dem Fahrzeugrahmen in Verbindung.

Bei einer weiteren vorteilhaften Ausführungsform decken die Seitenteile die Trägereinheiten für die Beleuchtungsmittel im wesentlichen ab. Das bedeutet, dass die Trägereinheiten hinter diesen Seitenteilen angeordnet sind. Bei einer weiteren vorteilhaften Ausführungsform sind die Trägereinheiten und die zentrale Stoßfängereinrichtung aus einem Kunststoff gefertigt. Auf diese Weise ist eine kostengünstige Fertigung der gesamten Stoßfängereinheit möglich. Vorteilhaft sind dabei die Trägereinheiten und die zentrale Stoßfängereinrichtung aus unterschiedlichen Kunststoffen gefertigt. So ist es möglich, beispielsweise die zentrale Stoßfängereinrichtung aus einem Thermoplasten, beispielsweise einem gespritzten Thermoplasten auszuführen und die Trägereinheiten zwar ebenfalls aus einem Thermoplast, aber beispielsweise aus einem faserverstärkten Thermoplasten wie beispielsweise einem faserverstärkten Polyamid. Auf diese Weise ist es möglich, die Trägereinheiten etwas stabiler auszuführen als die zentrale Stoßfängereinheit so, dass diese auch die Beleuchtungsmittel aufnehmen können.

Vorzugsweise handelt es sich bei dem Kraftfahrzeug um ein Nutzfahrzeug.

Die vorliegende Erfindung ist weiterhin auf eine Stoßfängeranordnung für Straßenkraftfahrzeuge gerichtet, welche eine zentrale Stoßfängereinrichtung und wenigstens zwei Trägereinheiten aufweist, welche zur Aufnahme von Beleuchtungsmitteln geeignet sind. Dabei weist die zentrale Stoßfängeranordnung ein Befestigungsmittel zur Anordnung der Stoßfängeranordnung an einem Fahrzeug auf. Die zentrale Stoßfängereinrichtung und die beiden Trägereinheiten sind getrennte Bauteile und die beiden Trägereinheiten weisen jeweils Befestigungsmittel zur Anordnung der Trägereinheiten an dem Fahrzeug auf. Damit ist es möglich, die zentrale Stoßfängereinrichtung und die beiden Trägereinheiten getrennt voneinander auszuführen. Die Stoßfängeranordnung weist ein Verbindungsrohr auf an dem die Trägereinheiten bevorzugt endseitig angeordnet sind. Mittels dieses Verbindungsrohrs werden damit die Trägereinheiten abgestützt bzw. umgekehrt stützen die beiden Trägereinheiten das Verbindungsrohr ab. Das Verbindungsrohr ist damit ein Bestandteil der erfindungsgemäßen Stoßfängeranordnung.

Vorzugsweise ist die zentrale Stoßfängeranordnung nicht unmittelbar an dem Fahrzeug angeordnet bzw. befestigt, sondern nur über weitere Strukturelemente, welche bevorzugt unmittelbar mit den Trägereinheiten in Verbindung stehen.

Bei einer weiteren vorteilhaften Ausführungsform sind die zentrale Stoßfängereinrichtung und die Trägereinheiten aus unterschiedlichen Kunststoffen gefertigt.

Bei einer weiteren vorteilhaften Ausführungsform ist auch die zentrale Stoßfängereinrichtung an dem Verbindungsrohr angeordnet.

Weitere Vorteile und Ausführungsformen ergeben sich aus den beigefügten Zeichnungen:

Darin zeigen:
- Fig. 1: eine Stoßfängeranordnung nach dem Stand der Technik;
- Fig. 2: eine perspektivische Ansicht einer erfindungsgemäßen Stoßfängeranordnung;
- Fig. 3a: eine Draufsicht von vorne auf einen Teil der erfindungsgemäßen Stoßfängeranordnung;
- Fig. 3b: eine perspektivische Ansicht der in Figur 3a gezeigten Darstellung;
- Fig. 4a: eine Ansicht eines Teils der erfindungsgemäßen Stoßfängeransicht von vorne; und
- Fig. 4b: eine Draufsicht auf die Ansicht aus Figur 4a.

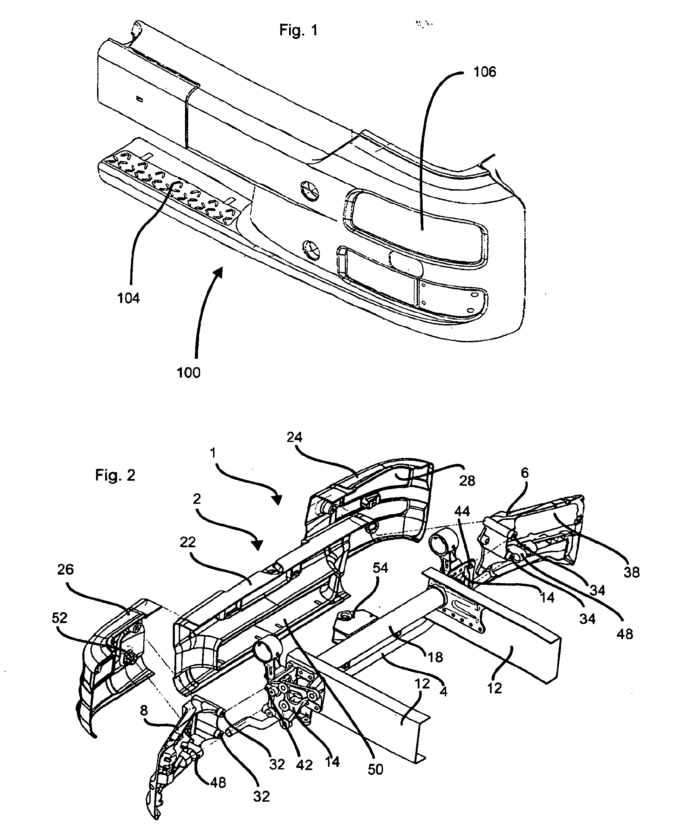

Fig. 1 zeigt eine teilweise Ansicht einer Stoßfängeranordnung 100 nach dem Stand der Technik. Diese Stoßfängeranordnung 100 ist hier einteilig abgebildet und weist eine Öffnung 106 für die Aufnahme eines Beleuchtungskörpers, wie beispielsweise eines Scheinwerfers auf. Weiterhin ist ein Trittbereich 104 vorgesehen, auf den sich der Fahrer stellen kann, um beispielsweise die Windschutzscheibe zur reinigen. Aus diesem Grund ist die Stoßfängeranordnung 100 relativ stabil auszuführen, um dem Gewicht einer erwachsenen Person, insbesondere eines erwachsenen Mannes, Stand zu halten. Gleichwohl ist jedoch die Stoßfängeranordnung 100 nicht so stabil ausgeführt, dass sie Schutz im Falle eines Auffahrunfalls bietet. Gleichwohl ist es im Falle einer Beschädigung dieser Stoßfängeranordnung 100 erforderlich, die gesamte Stoßfängeranordnung 100 auszuwechseln was auch mit erhöhten Arbeitszeitkosten einhergeht.

Fig. 2 zeigt eine perspektivische Ansicht einer erfindungsgemäßen Stoßfängeranordnung 1, die an einem Teil eines Fahrzeugs angeordnet ist. Dabei bezeichnet das Bezugszeichen 12 zwei Längsträger des Fahrzeugs, die über einen Querträger 18 miteinander verbunden sind. Das Bezugszeichen 14 bezieht sich jeweils auf Lenkblöcke, die an den Längsträgern 12 angeordnet sind. An diesem Bereich des Fahrzeugs ist die mehrteilige Stoßfängeranordnung 2 angeordnet. Diese Stoßfängeranordnung 2 setzt sich unter anderem aus einer zentralen Stoßfängereinrichtung 2 sowie zwei Trägereinheiten 6,8 zusammen, wobei diese zentrale Stoßfängereinheit 2 und die Trägereinheiten 6 und 8 nicht direkt miteinander in Verbindung stehen.

Die beiden Trägereinheiten 6,8 weisen jeweils Öffnungen 38 zur Aufnahme von Beleuchtungsmitteln auf. Weiter sind im Gegensatz zum Stand der Technik die beiden Trägereinheiten 6, 8 direkt an dem Fahrgestell und hier insbesondere an dem Lenkblock 14 angeordnet. Das Bezugszeichen 4 bezieht sich auf ein Verbindungsrohr, welches bevorzugt ebenfalls an den Längsträgern 12 angeordnet ist. Am Endbereich dieses Verbindungsrohr 4 sind die beiden Trägereinheiten 6,8 angeordnet. Bezugszeichen 32 und 34 beziehen sich auf Verbindungseinrichtungen wie Steckverbindungen, welche in entsprechende Steckverbindungen 42, 44 an den Lenkblöcken 14 eingreifen.

Das Bezugszeichen 54 bezieht sich auf ein sog. Fangmaul, in das beispielsweise ein Abschleppseil oder eine sonstige Abschleppvorrichtung eingeführt werden kann. Diese Abschleppvorrichtung 54 ragt im zusammengebauten Zustand durch eine entsprechende Öffnung in der zentralen Stoßfängereinrichtung 2. Die zentrale Stoßfängereinrichtung 2 ist, wie in Figur 1 gezeigt ebenfalls dreiteilig aufgebaut und setzt sich aus einem Mittelteil 22 und um dieses Mittelteil 22 angeordneten Seitenteilen 24 und 26 zusammen. Diese beiden Seitenteile 24 und 26 sind dabei in Fahrtrichtung vor den Trägereinheiten 6 bzw. 8 angeordnet und weisen jeweils eine Öffnung auf, durch welche das von den (nicht gezeigten) Beleuchtungseinrichtungen austretende Licht hindurch treten kann . Weiterhin sind Verbindungseinrichtungen 52 vorgesehen, um die Seitenteile 24, 26 an den Trägerseiten 6,8 anzuordnen.

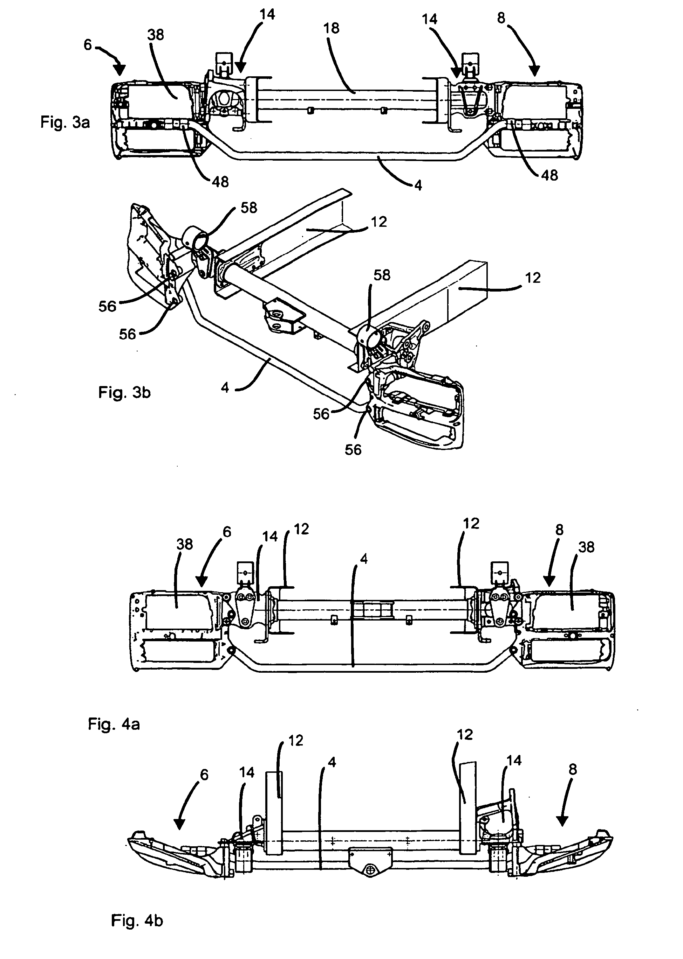

Figur 3a zeigt eine Draufsicht von hinten auf denjenigen Bereich des Fahrzeugs, an dem die beiden Trägereinheiten 6, 8 angeordnet sind. Man erkennt hier wiederum die Öffnungen 38 zur Aufnahme der Beleuchtungsmittel (nicht gezeigt). Weiterhin erkennt man, dass die Endabschnitte des Verbindungsrohrs 4 in Klemmeinrichtungen 48, die hier ringförmig ausgebildet sind aufgenommen sind. Das Verbindungsrohr 4 ist, wie in Figur 3a erkennbar, aus einem Mittelteil nach unten gebogen. In zusammengebauten Zustand ist dieser mittlere Bereich unter dem Trittbereich 50 des Mittelteils 22 der zentralen Stoßfängereinrichtung 2 angeordnet und auf diese Weise ist es möglich, dass der Fahrer, der auf den Trittbereich 50 tritt, damit direkt das belastbare Verbindungsrohr 4 belastet.

Bei der in Figur 3a gezeigten Ausführungsform ist das Verbindungsrohr 4 lediglich an den beiden Trägereinheiten 6,8 angeordnet. Bevorzugt ist jedoch dieses Verbindungsrohr zusätzlich auch zumindest mittelbar an den Längsträgern 12 angeordnet oder auch an einem Bestandteil des Lenkblocks 14.

Figur 3b zeigt eine perspektivische Darstellung der in Figur 3a gezeigten Anordnung. Man erkennt hier zwei weitere Hülsenkörper 58, welche zur Lagerung des Führerhauses des Fahrzeugs dienen. Auch sind hier die Verbindungseinrichtungen 56 erkennbar, die zur Verbindung mit den in Figur 2 gezeigten Seitenteilen der Stoßfängeranordnung dienen.

Fig. 4a und 4b zeigen eine Ansicht des in Figur 3a gezeigten Details von hinten. Man erkennt auch hier wieder die Anordnung der Trägereinheiten 6 und 8 an den jeweiligen Lenkblöcken 14.

Wie in den Figuren gezeigt, steht das Verbindungsrohr 4 nicht direkt mit der zentralen Stoßfängereinrichtung in Verbindung sondern stützt diese lediglich im Bereich des Trittbereichs ab. Es wäre jedoch auch möglich, dass die zentrale Stoßfängereinrichtung 2 fest an dem Verbindungsrohr 4 oder aber an einem Bereich des Längsträgers 12 oder aber einem Bereich des Lenkungsblocks 14 angeordnet ist.

### Bezugszeichenliste

- 1: Stoßfängeranordnung
- 2: Stoßfängereinrichtung
- 4: Verbindungsrohr
- 6,8: Trägereinheiten
- 12: Längsträger
- 14: Lenkblöcke
- 22: Mittelteil
- 24, 26: Seitenteile
- 28: Öffnung in Seitenteil
- 32, 34: Verbindungseinrichtung
- 38: Öffnungen
- 42,44: Steckverbindung
- 48: Klemmeinrichtung
- 50: Trittbereich
- 52: Verbindungseinrichtung
- 54: Fangmaul
- 56: Verbindungseinrichtung
- 58: Hülsenkörper
- 100: Stoßfängeranordnung (Stand der Technik)
- 104: Trittbereich (Stand der Technik)
- 106: Öffnung (Stand der Technik)

## Patentansprüche

1. Kraftfahrzeug und insbesondere Nutzfahrzeug mit einem Fahrgestellrahmen (12) und einem Lenkungsblock (14) und mit einer frontseitigen Stoßfängeranordnung (1), wobei die Stoßfängeranordnung (1) wenigstens eine zentrale Stoßfängereinrichtung (2) sowie wenigstens zwei Trägereinheiten (6,8) für Beleuchtungsmittel des Fahrzeugs aufweist und diese beiden Trägereinheiten (6, 8) voneinander beabstandet sind, wobei die Stoßfängeranordnung (1) an dem Fahrzeug befestigt ist,
wobei
die Trägereinheiten (6, 8) getrennt von der zentralen Stoßfängereinrichtung (2) ausgeführt sind und die Trägereinheiten (6, 8) an dem Fahrzeug befestigt sind, **dadurch gekennzeichnet, dass** die Trägereinheiten (6, 8) an einem gemeinsamen Verbindungsrohr (4) angeordnet sind.

2. Kraftfahrzeug nach Anspruch 1,
**dadurch gekennzeichnet, dass**
die Trägereinheiten (6, 8) jeweils an dem Lenkungsblock (14) angeordnet sind.

3. Kraftfahrzeug nach wenigstens einem der vorangegangenen Ansprüche,
**dadurch gekennzeichnet, dass**
die Trägereinheiten (6,8) endseitig an dem gemeinsamen Verbindungsrohr (4) angeordnet sind.

4. Kraftfahrzeug nach einem der vorhergehenden Ansprüche,
**dadurch gekennzeichnet, dass**
das Verbindungsrohr (4) aus einem Metall gefertigt ist und zur Aufnahme von Transversalkräften geeignet ist.

5. Kraftfahrzeug nach einem der vorhergehenden Ansprüche,
**dadurch gekennzeichnet, dass**
die zentrale Stoßfängereinrichtung (2) an dem Verbindungsrohr (4) angeordnet ist.

6. Kraftfahrzeug nach einem der vorhergehenden Ansprüche,
**dadurch gekennzeichnet, dass**
die zentrale Stoßfängereinrichtung (2) mehrteilig ausgebildet ist.

7. Kraftfahrzeug nach Anspruch 6,
**dadurch gekennzeichnet, dass**
die zentrale Stoßfängereinrichtung (2) ein Mittelteil (22) und zwei an diesem Mittelteil (22) angeordnete Seitenteile (24, 26) aufweist.

8. Kraftfahrzeug nach Anspruch 7,
**dadurch gekennzeichnet, dass**
die Seitenteile (24, 26) die Trägereinheiten (6, 8) für die Beleuchtungsmittel im wesentlichen abdecken.

9. Kraftfahrzeug nach einem der vorhergehenden Ansprüche,
**dadurch gekennzeichnet, dass**
die Trägereinheiten (6, 8) und/oder die zentrale Stoßfängereinrichtung (2) aus einem Kunststoff gefertigt sind.

10. Kraftfahrzeug nach Anspruch 9,
**dadurch gekennzeichnet, dass**
die Trägereinheiten (6, 8) und die zentrale Stoßfängereinrichtnug (2) aus unterschiedlichen Kunststoffen gefertigt sind.

11. Kraftfahrzeug nach einem der vorhergehenden Ansprüche,
**dadurch gekennzeichnet, dass**
das Kraftfahrzeug ein Nutzfahrzeug ist.

12. Stoßfängeranordnung (1) für Straßenkraftfahrzeuge mit einer zentralen Stoßfängereinrichtung (2) und wenigstens zwei Trägereinheiten (6, 8), welche zur Aufnahme von Beleuchtungsmitteln geeignet sind, wobei die Stoßfängeranordnung (1) ein Befestigungsmittel zur Anordnung der Stoßfängeranordnung (1) an dem Fahrzeug aufweist, wobei
die zentrale Stoßfängereinrichtung (2) und die beiden Trägereinheiten (6, 8) getrennte Bauteile sind und die beiden Trägereinheiten (6, 8) jeweils Befestigungsmittel (32, 34) zur Anordnung der Trägereinheiten (6, 8) an dem Fahrzeug aufweisen,
**dadurch gekennzeichnet, dass**
die Stoßfängeranordnung (1) ein Verbindungsrohr (4) auweist, an dem die Trägereinheiten (6, 8) angeordnet sind.

13. Stoßfängeranordnung nach Anspruch 12,
**dadurch gekennzeichnet, dass**
die Trägereinheiten (6, 8) am Verbindungsrohr (4) endseitig angeordnet sind.

14. Stoßfängeranordnung nach Anspruch 12 oder 13,
**dadurch gekennzeichnet, dass**
die zentrale Stoßfängereinrichtung (2) und die Trägereinheiten (6,8) aus unterschiedlichen Kunststoffen gefertigt sind.

15. Stoßfängeranordnung nach einem der Ansprüche 12 bis 14,
**dadurch gekennzeichnet, dass**
die zentrale Stoßfängereinrichtung (2) an dem Verbindungsrohr (4) angeordnet ist.

## Claims

1. Motor vehicle and in particular a commercial vehicle with a chassis frame (12) and a steering unit (14) and a bumper assembly on the front side (1), whereby the bumper assembly (1) provides at least one central bumper device (2) and at least two carrier units (6, 8) for vehicle lights, which two carrier units (6, 8) are separated from each other, whereby the bumper assembly (1) is fastened to the vehicle, whereby the carrier units (6, 8) are arranged separately from the central bumper device (2) and the carrier units (6, 8) are fastened on the vehicle, **characterised in that** the carrier units (6, 8) are arranged on a common connecting tube (4).

2. Motor vehicle in accordance with claim 1, **characterised in that** the carrier units (6, 8) are each arranged on the steering unit (14).

3. Motor vehicle in accordance with at least one of the previous claims, **characterised in that** the ends of the carrier units (6, 8) are arranged on the common connecting tube (4).

4. Motor vehicle in accordance with one of the previous claims, **characterised in that** the connecting tube (4) is produced from a metal and is suitable for withstanding transversal forces.

5. Motor vehicle in accordance with one of the previous claims, **characterised in that** the central bumper device (2) is arranged on the connecting tube (4).

6. Motor vehicle in accordance with one of the previous claims, **characterised in that** the central bumper device (2) is designed in several parts.

7. Motor vehicle in accordance with claim 6, **characterised in that** the central bumper device (2) provides a central part (22) and two side parts (24, 26) arranged on this central part (22).

8. Motor vehicle in accordance with claim 7, **characterised in that** the side parts (24, 26) essentially cover the carrier units (6, 8) for the lights.

9. Motor vehicle in accordance with one of the previous claims, **characterised in that** the carrier units (6, 8) and/or the central bumper device (2) are produced from a synthetic material.

10. Motor vehicle in accordance with claim 9, **characterised in that** the carrier units (6, 8) and the central bumper device (2) are produced from different synthetic materials.

11. Motor vehicle in accordance with one of the previous claims, **characterised in that** the motor vehicle is a commercial vehicle.

12. Bumper assembly (1) for road vehicles with a central bumper device (2) and at least two carrier units (6, 8), which carrier units are suitable for mounting lights, whereby the bumper assembly (1) provides a fastening device for arranging the bumper assembly (1) on the vehicle, whereby the central bumper device (2) and the two carrier units (6, 8) are separate components and the stated two carrier units (6, 8) each provide fastening devices (32, 34) for arranging the carrier units (6, 8) on the vehicle, **characterised in that** the bumper assembly (1) provides a connecting tube (4) on which the carrier units (6, 8) are arranged.

13. Bumper assembly in accordance with claim 12, **characterised in that** the carrier units (6, 8) are arranged on the end of the connecting tube (4).

14. Bumper assembly in accordance with claim 12 or claim 13, **characterised in that** the central bumper device (2) and the carrier units (6, 8) are produced from different synthetic materials.

15. Bumper assembly in accordance with one of the claims 12 to 14, **characterised in that** the central bumper device (2) is arranged on the connecting tube (4).

## Revendications

1. Véhicule automobile, en particulier un véhicule industriel, avec un cadre de châssis (12) et un bloc de direction (14) et avec un système d'agencement de pare-chocs (1) sur la face avant, auquel cas le système d'agencement de pare-chocs (1) présente au moins un dispositif de pare-chocs central (2) ainsi qu'au moins deux unités porteuses (6, 8) pour les moyens d'éclairage du véhicule et ces deux unités porteuses (6, 8) sont distantes l'une de l'autre, auquel cas le système d'agencement de pare-chocs (1) est fixé sur le véhicule, auquel cas les unités porteuses (6, 8) sont réalisées de manière séparée par rapport au dispositif de pare-chocs central (2) et les unités porteuses (6, 8) sont fixées sur le véhicule, **caractérisé en ce que** les unités porteuses (6, 8) sont disposées sur un tube de liaison commun (4).

2. Véhicule automobile selon la revendication 1, **caractérisé en ce que** les unités porteuses (6, 8) sont disposées chacune sur le bloc de direction (14).

3. Véhicule automobile selon au moins l'une des revendications mentionnées précédemment, **caractérisé en ce que** les unités porteuses (6, 8) sont disposées à l'extrémité du tube de liaison commun (4).

4. Véhicule automobile selon l'une des revendications mentionnées précédemment, **caractérisé en ce que** le tube de liaison (4) est fabriqué en métal et convient à l'absorption de forces transversales.

5. Véhicule automobile selon l'une des revendications mentionnées précédemment, **caractérisé en ce que** le dispositif de pare-chocs central (2) est disposé sur le tube de liaison (4).

6. Véhicule automobile selon l'une des revendications mentionnées précédemment, **caractérisé en ce que** le dispositif de pare-chocs central (2) est réalisé en plusieurs parties.

7. Véhicule automobile selon la revendication 6, **caractérisé en ce que** le dispositif de pare-chocs central (2) présente une partie centrale (22) et deux parties latérales (24, 26) disposées sur cette partie centrale (22).

8. Véhicule automobile selon la revendication 7, **caractérisé en ce que** les parties latérales (24, 26) recouvrent pour l'essentiel les unités porteuses (6, 8) des moyens d'éclairage.

9. Véhicule automobile selon l'une des revendications mentionnées précédemment, **caractérisé en ce que** les unités porteuses (6, 8) et/ou le dispositif de pare-chocs central (2) sont fabriqués en matériau composite.

10. Véhicule automobile selon la revendication 9, **caractérisé en ce que** les unités porteuses (6, 8) et le dispositif de pare-chocs central (2) sont fabriqués en différents matériaux composites.

11. Véhicule automobile selon l'une des revendications mentionnées précédemment, **caractérisé en ce que** le véhicule automobile est un véhicule industriel.

12. Système d'agencement de pare-chocs (1) pour véhicules automobiles routiers avec un dispositif de pare-chocs central (2) et au moins deux unités porteuses (6, 8) permettant d'accueillir des moyens d'éclairage, auquel cas le système d'agencement de pare-chocs (1) présente un moyen de fixation pour la mise en place du système d'agencement de pare-chocs (1) sur le véhicule, auquel cas le dispositif de pare-chocs central (2) et les deux unités porteuses (6, 8) sont des composants séparés et les deux unités porteuses (6, 8) présentent chacune des moyens de fixation (32, 34) pour la mise en place des unités porteuses (6, 8) sur le véhicule, **caractérisé en ce que** le système d'agencement de pare-chocs (1) présente un tube de liaison (4) sur lequel les unités porteuses (6, 8) sont disposées.

13. Système d'agencement de pare-chocs selon la revendication 12, **caractérisé en ce que** les unités porteuses (6, 8) sont disposées à l'extrémité du tube de liaison (4).

14. Système d'agencement de pare-chocs selon la revendication 12 ou 13, **caractérisé en ce que** le dispositif de pare-chocs central (2) et les unités porteuses (6, 8) sont fabriqués en différents matériaux composites.

15. Système d'agencement de pare-chocs selon l'une des revendications 12 à 14, **caractérisé en ce que** le dispositif de pare-chocs central (2) est disposé sur le tube de liaison (4).
